# EUROPÄISCHE PATENTSCHRIFT

(11) **EP 2 454 918 B1**
(45) Veröffentlichungstag und Bekanntmachung des Hinweises auf die Patenterteilung: **06.03.2013**
(21) Anmeldenummer: 10725203.3
(22) Anmeldetag: 23.06.2010
(51) Int. Cl.: H05B 3/84

(54) **ELEKTRISCH GROSSFLÄCHIG BEHEIZBARER, TRANSPARENTER GEGENSTAND, VERFAHREN ZU SEINER HERSTELLUNG UND SEINE VERWENDUNG**
TRANSPARENT ARTICLE WHICH CAN BE ELECTRICALLY EXTENSIVELY HEATED, METHOD FOR THE PRODUCTION THEREOF AND THE USE THEREOF
OBJET TRANSPARENT POUVANT ÊTRE CHAUFFÉ ÉLECTRIQUEMENT SUR UNE GRANDE SURFACE, ET PROCÉDÉ DE FABRICATION ET UTILISATION DUDIT OBJET

(30) Priorität: 17.07.2009 DE 102009026200
(43) Veröffentlichungstag der Anmeldung: 23.05.2012
(73) Patentinhaber: Saint-Gobain Glass France, 92400 Courbevoie (FR)
(72) Erfinder: OFFERMANN, Volkmar, 52249 Eschweiler (DE); TIMMERMANN, Alwin, 50933 Köln (DE)
(74) Vertreter: Lendvai, Tomas
(86) Internationale Anmeldenummer: PCT/EP2010/058876
(87) Internationale Veröffentlichungsnummer: WO 2011/006743

(56) Entgegenhaltungen:
- EP-A1- 1 908 584
- WO-A2-03/015473
- WO-A2-03/024155
- GB-A- 2 381 179

## Beschreibung

### Stand der Technik

Die vorliegende Erfindung betrifft einen neuen, elektrisch großflächig beheizbaren, transparenten Gegenstand, umfassend ein transparentes, elektrisch isolierendes Substrat mit einer großflächigen, elektrisch leitfähigen, transparenten Beschichtung, enthaltend mindestens einen örtlich begrenzten, von der elektrisch leitfähigen Beschichtung freien, transparenten Bereich. Außerdem betrifft die vorliegende Erfindung ein neues Verfahren zur Herstellung eines elektrisch großflächig beheizbaren, transparenten Gegenstands.

Nicht zuletzt betrifft die vorliegende Erfindung die neue Verwendung des neuen transparenten Gegenstands, umfassend ein transparentes, elektrisch isolierendes Substrat mit einer elektrisch großflächig beheizbaren, transparenten Beschichtung, mit mindestens einem örtlich begrenzten, von der elektrisch leitfähigen Beschichtung freien, transparenten Bereich sowie des mithilfe des neuen Verfahrens hergestellten elektrisch großflächig beheizbaren, transparenten Gegenstands mit einem transparenten Substrat mit einer großflächigen, elektrisch leitfähigen, transparenten Beschichtung, die mindestens einen örtlich begrenzten, von der elektrisch leitfähigen Beschichtung freien, transparenten Bereich enthält.

Aus dem europäischen Patent EP 1 183 912 B1 ist eine Autoverglasungsplatte oder - scheibe, insbesondere eine Windschutzscheibe, mit einer transparenten, elektrisch großflächig beheizbaren Beschichtung für den Sonnenschutz bzw. für die Solarsteuerung oder Solarregelung bekannt. Die elektrisch beheizbare Beschichtung ist mit zwei elektrischen Sammelbändern verbunden, die die elektrische Leistung auf die elektrisch beheizbare Beschichtung übertragen. Diese bekannte Windschutzscheibe weist mindestens ein Datenübertragungsfenster oder so genanntes Kamera- oder Sensorfeld auf, durch das eine Kamera oder ein Sensor durch die Windschutzscheibe "hindurch blicken" kann. Dieses Fenster oder Feld ist in teilweisem Kontakt zu der elektrisch großflächig beheizbaren Beschichtung positioniert. Durch diese Diskretstelle wird aber die Homogenität des elektrischen Feldes in der großflächigen, elektrisch leitfähigen Beschichtung zerstört.

Dadurch können Heiß- und Kaltstellen in der Windschutzscheibe entstehen, die thermische Spannungen hervorrufen, die zu einer Schädigung der Windschutzscheibe führen können, und/oder Lichtflecken, die die Sicht behindern können.

Diesem schwer wiegenden Problem versucht das europäischen Patent EP 1 183 912 B1 dadurch zu begegnen, dass wenigstens ein Bereich des Umfangs der Diskretstelle durch ein elektrisch leitfähiges Band begrenzt ist, das mit einer Sammelschiene verbunden ist und das einen elektrischen Widerstand aufweist, der beträchtlich geringer ist als der elektrische Widerstand in Ohm pro Quadrat der großflächigen, elektrisch leitfähigen Beschichtung. Insbesondere soll das elektrisch leitfähige Band einen elektrischen Widerstand von <0,35 und insbesondere <0,05 Ohm pro Quadrat haben.

In US 6 734 396 B2 wird eine beheizbare Fahrzeugscheibe mit einem Datenübertragungsfenster beschrieben, bei der einer gemeinsamen unteren Sammelschiene mehrere getrennte obere Sammelschienen entgegengestellt sind. Zwischen den oberen Sammelschienen und der gemeinsamen unteren Sammelschiene werden unterschiedliche Spannungen angelegt, die durch mehrere Spannungsquellen erzeugt werden.

In US 6 559 419 B1 wird eine beheizbare Fahrzeugscheibe mit einem Datenübertragungsfenster beschrieben, bei der die elektrisch leitfähige Beschichtung in mehrere, elektrisch voneinander isolierte Bereiche unterteilt ist. Die Bereiche haben eine gemeinsame obere und eine gemeinsame untere Sammelschiene, zwischen denen die Heizspannung angelegt wird.

Zwar kann durch diese Maßnahme die Homogenität des elektrischen Feldes verbessert und die Bildung von Heiß- und Kaltstellen und/oder von Lichtflecken bis zu einem gewissen Grad unterdrückt werden, befriedigt das erreichte Niveau jedoch nicht im vollen Umfang, sondern bedarf der weiteren Verbesserung.

Der vorliegenden Erfindung liegt die Aufgabe zu Grunde, die Nachteile des Standes der Technik zu beheben und insbesondere die aus dem europäischen Patent EP 1 183 912 B1 bekannten Autoverglasungsplatten oder -scheiben, insbesondere Windschutzscheiben, hinsichtlich der Homogenität des elektrischen Feldes und der Unterdrückung der Bildung von Heiß- und Kaltstellen weiter zu verbessern, um die Schädigung der Scheiben durch thermische Spannungen und/oder die Behinderung der Sicht durch Lichtflecken wirksam zu verhindern.

Aufgabe der vorliegenden Erfindung ist es, einen neuen elektrisch großflächig beheizbaren, transparenten Gegenstand, insbesondere eine neue Verbundsicherheitsglasscheibe, speziell eine Windschutzscheibe, bereit zu stellen.

Eine weitere Aufgabe der vorliegenden Erfindung ist es, ein neues, verbessertes Verfahren zur Herstellung eines elektrisch großflächig beheizbaren, transparenten Gegenstandes, insbesondere einer Verbundsicherheitsglasscheibe, speziell einer Windschutzscheibe, bereit zu stellen.

Eine weitere Aufgabe der vorliegenden Erfindung ist es, eine neue Verwendung für den neuen, verbesserten, elektrisch großflächig beheizbaren, transparenten Gegenstand in einem Fortbewegungsmittel zu Lande, zur Luft und zu Wasser sowie im Bau-, Möbel- und Gerätesektor zu finden. Dabei soll sich in dem betreffenden elektrisch großflächig beheizbaren, transparenten Gegenstand bei Anlegung von elektrischer Spannung ein homogenes oder im Wesentlichen homogenes elektrisches Feld ohne Heiß- und Kaltstellen bilden, so dass keine thermischen Spannungen und/oder Lichtflecken mehr auftreten können.

Die Aufgabe der vorliegenden Erfindung wird gelöst, durch einen elektrisch großflächig beheizbaren, transparenten Gegenstand, umfassend:
- mindestens eine großflächige, elektrisch leitfähige, transparente Beschichtung auf einem transparenten Substrat, die mit zwei elektrischen Sammelbändern zur Übertragung elektrischer Leistung elektrisch kontaktiert ist,
- mindestens einen örtlich begrenzten, von der Beschichtung abgegrenzten Bereich und
- mindestens einen örtlich begrenzten, von der Beschichtung freien, transparenten Bereich, innerhalb des abgegrenzten Bereichs,
   wobei der abgegrenzte Bereich durch
- mindestens zwei parallel zu Äquipotentiallinien verlaufende, über mindestens einen ohmschen Widerstand verbundene Stromsammelbereiche auf der Beschichtung und
- mindestens zwei parallel zu elektrischen Feldlinien verlaufende elektrisch isolierende Trennlinien mindestens teilweise begrenzt ist.

Der erfindungsgemäße elektrisch großflächig beheizbare, transparente Gegenstand kann in einfacher und in sehr gut reproduzierbarer Weise in hohen Stückzahlen geliefert werden, wobei die transparente Beschichtung ein elektrisch leitfähiges Material aufweist. Dabei befindet sich in der großflächigen, elektrisch leitfähigen Beschichtung mindestens ein örtlich begrenzter, von der elektrisch leitfähigen Beschichtung freier, transparenter Bereich, insbesondere ein Kamera- oder Sensorfeld, dessen Peripherie zumindest teilweise von einem elektrisch leitfähigen Band umgeben ist, dessen Widerstand in Ohm pro Quadrat wesentlich geringer ist als der Widerstand in Ohm pro Quadrat der großflächigen, elektrisch leitfähigen Beschichtung.

Der erfindungsgemäße elektrisch großflächig beheizbare, transparente Gegenstand ist insbesondere hinsichtlich der Homogenität des elektrischen Feldes und der Unterdrückung der Bildung von Heiß- und Kaltstellen signifikant verbessert, um die Schädigung der Scheiben durch thermische Spannungen und/oder Behinderung der Sicht durch Lichtflecken wirkungsvoll zu verhindern.

Eine bevorzugte Ausgestaltung der Erfindung ist ein elektrisch großflächig beheizbarer, transparenter Gegenstand, wobei die Potentiale der Stromsammelbereiche und die Potentiale der angrenzenden Äquipotentiallinien gleich sind.

Eine bevorzugte Ausgestaltung der Erfindung ist ein elektrisch großflächig beheizbarer, transparenter Gegenstand, wobei mindestens ein Stromsammelbereich mindestens teilweise ein Stromsammelband enthält.

Eine bevorzugte Ausgestaltung der Erfindung ist ein elektrisch großflächig beheizbarer, transparenter Gegenstand, wobei der ohmsche Widerstand einen elektrischen Schichtwiderstand von 0,1 Ohm pro Quadrat bis 100 Ohm pro Quadrat aufweist.

Eine bevorzugte Ausgestaltung der Erfindung ist ein elektrisch großflächig beheizbarer, transparenter Gegenstand, wobei der ohmsche Widerstand eine silberhaltige Siebdruckpaste enthält.

Eine bevorzugte Ausgestaltung der Erfindung ist ein elektrisch großflächig beheizbarer, transparenter Gegenstand, wobei der ohmsche Widerstand aus einem Teilbereich der Beschichtung innerhalb des Bereichs gebildet wird.

Eine bevorzugte Ausgestaltung der Erfindung ist ein elektrisch großflächig beheizbarer, transparenter Gegenstand, wobei der ohmsche Widerstand in einem diskreten elektrischen Bauelement oder einen Heizdraht enthalten ist.

Eine bevorzugte Ausgestaltung der Erfindung ist ein elektrisch großflächig beheizbarer, transparenter Gegenstand, wobei die elektrischen Trennlinien eine Breite von 50 pm bis 20 mm aufweisen.

Eine bevorzugte Ausgestaltung der Erfindung ist ein elektrisch großflächig beheizbarer, transparenter Gegenstand, wobei die elektrisch leitfähigen Stromsammelbereiche eine Breite von 100 µm bis 20 mm aufweisen.

In einer bevorzugten Ausgestaltung der Erfindung ist der ohmsche Widerstand, der die Stromsammelbereiche verbindet, so dimensioniert, dass unter einer festgelegten Heizstromdichte der Spannungsabfall über den ohmschen Widerstand das Potential der Stromsammelbereiche dem Potential der Äquipotentiallinien anpasst. Der ohmsche Widerstand ist derart im Bereich zu einem Datenübertragungsfenster angeordnet, dass die Joulesche Verlustwärme des ohmschen Widerstands das Datenübertragungsfenster vor Beschlag und Vereisung schützt.

Die Aufgabe der vorliegenden Erfindung wird weiter gelöst, durch ein Verfahren zur Herstellung eines elektrisch großflächig beheizbaren, transparenten Gegenstands, wobei
(I) ein elektrisch leitfähiges Material großflächig auf ein transparentes, elektrisch isolierendes Substrat aufgebracht wird, wobei mindestens eine transparente, elektrisch leitfähige Beschichtung und mindestens ein örtlich begrenzter, von der elektrisch leitfähigen Beschichtung freier, transparenter Bereich, der wenigstens teilweise in Kontakt mit der Beschichtung positioniert ist, erzeugt wird,
(II) die Beschichtung mit zwei Stromsammelbändern elektrisch kontaktiert wird,
(III) in die Beschichtung elektrische Trennlinien parallel der elektrischen Feldlinien eingebracht werden,
(IV) auf der Beschichtung zwischen den zwei Trennlinien elektrisch leitfähige Stromsammelbereiche parallel der Äquipotentiallinien gebildet werden und ein von der Beschichtung abgegrenzter Bereich gebildet wird und
die elektrisch leitfähigen Stromsammelbereiche über mindestens einen ohmschen Widerstand verbunden werden.

Die mithilfe des neuen Verfahrens hergestellten, elektrisch großflächig beheizbaren, transparenten Gegenstände werden insbesondere hinsichtlich der Homogenität des elektrischen Feldes und der Unterdrückung der Bildung von Heiß- und Kaltstellen signifikant verbessert. Die Schädigung der Gegenstände durch thermische Spannungen und/oder die Behinderung der Sicht durch Lichtflecken wird wirkungsvoll verhindert.

Eine bevorzugte Ausgestaltung der Erfindung ist ein Verfahren, wobei mindestens ein elektrisch leitfähiger Stromsammelbereich in einem Siebdruckverfahren auf die Beschichtung aufgebracht wird.

Eine bevorzugte Ausgestaltung der Erfindung ist ein Verfahren, wobei die elektrischen Trennlinien und mit einem Laserschnitt oder mechanisch abrasiv in die Beschichtung eingebracht werden.

Eine bevorzugte Ausgestaltung der Erfindung ist ein Verfahren, bei dem der ohmsche Widerstand, der die Stromsammelbereiche verbindet, so dimensioniert wird, dass unter einer festgelegten Heizstromdichte der Spannungsabfall über den ohmschen Widerstand das Potential der Stromsammelbereiche dem Potential der Äquipotentiallinien anpasst. Der ohmsche Widerstand wird derart im Bereich zu einem Datenübertragungsfenster angeordnet, dass die Joulesche Verlustwärme des ohmschen Widerstands das Datenübertragungsfenster vor Beschlag und Vereisung schützt.

Die Aufgabe der vorliegenden Erfindung wird weiter gelöst, durch eine Verwendung des elektrisch großflächig beheizbaren, transparenten Gegenstands in Fortbewegungsmitteln für den Verkehr zu Lande, zur Luft und zu Wasser sowie im Möbel-, Geräte- und Bausektor.

Eine bevorzugte Ausgestaltung der Erfindung ist eine Verwendung des elektrisch großflächig beheizbaren, transparenten Gegenstands in Fortbewegungsmitteln für den Verkehr mit Fahrerassistenzsystemen.

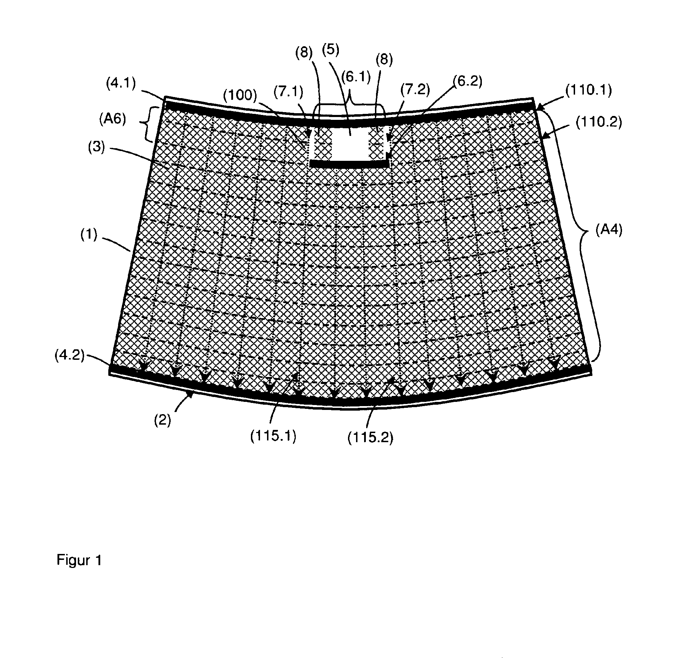

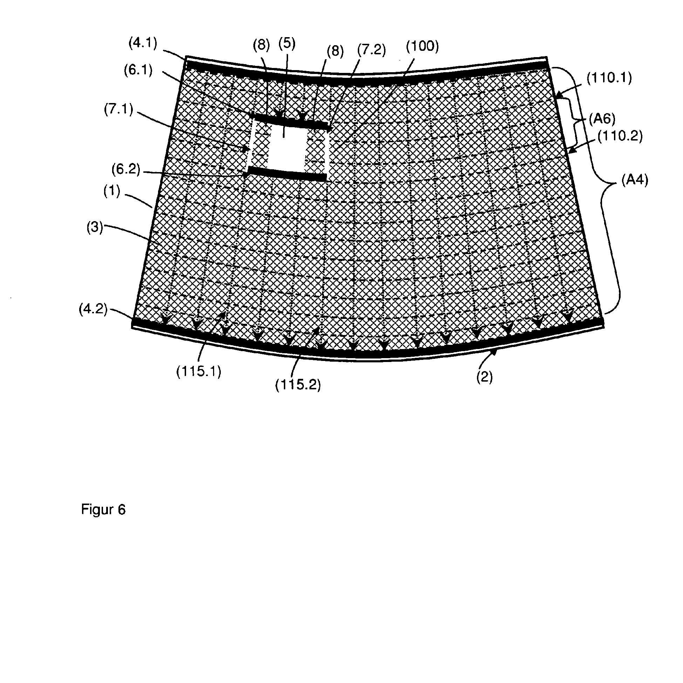

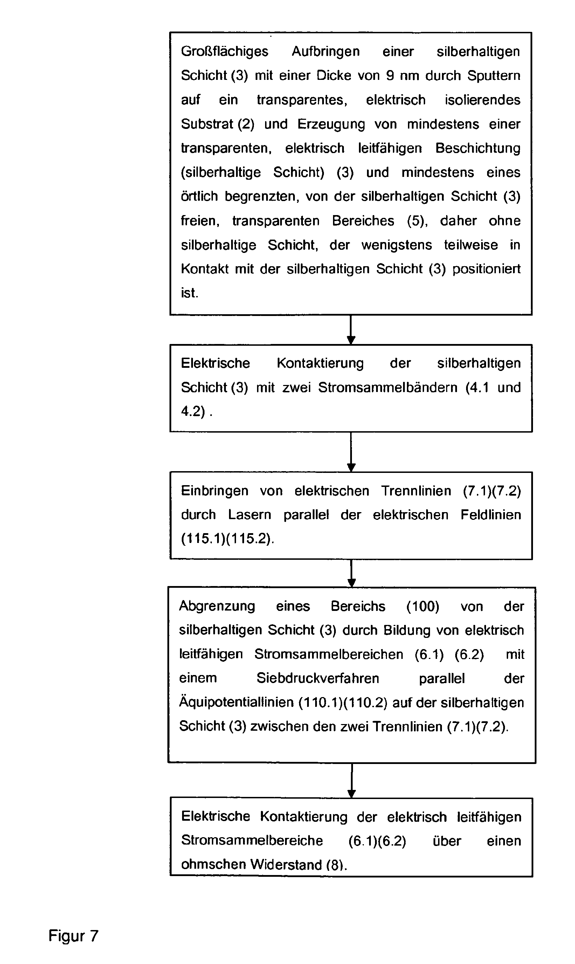

Im Folgenden wird der erfindungsgemäße Gegenstand anhand der Figuren 1 und 6 beispielhaft erläutert. Bei den Figuren 1 bis 6 handelt es sich um schematische Darstellungen, die das Prinzip der Erfindung veranschaulichen sollen. Das erfindungsgemäße Verfahren wird in Figur 7 beispielhaft erläutert.

### Ausführungsbeispiele

Es zeigen
Figur 1 eine Draufsicht der ersten Ausführungsform der Erfindung,
Figur 2 eine Detailaufsicht der ersten Ausführungsform der Erfindung,
Figur 3 eine Detailaufsicht einer zweiten Ausführungsform,
Figur 4 eine Detailaufsicht einer dritten Ausführungsform,
Figur 5 eine Detailaufsicht einer vierten Ausführungsform,
Figur 6 eine Draufsicht auf eine weitere Ausführungsform der Erfindung und
Figur 7 ein Flussdiagramm eines Ausführungsbeispiels des erfindungsgemäßen Verfahrens.

Bei den Substraten (2) nach den Ausführungsformen der Figuren 1 bis 6 handelte es sich um Floatglasscheiben der Abmessungen, wie sie beispielsweise für Windschutzscheiben verwendet werden.

Bei den Beschichtungen (3) nach den Ausführungsformen der Figuren 1 bis 6 handelt es sich jeweils um eine Beschichtung, wie sie in der deutschen Übersetzung des europäischen Patents EP 0 847 965 B1 mit dem Aktenzeichen DE 697 31 2 168 T2, Beispiel 1, Seite 9, Absatz [0063], bis Seite 11, Absatz [0080], beschrieben sind. Es handelt sich bevorzugt um Silber enthaltende Schichten. Der bevorzugte Flächenwiderstand der Beschichtung (3) beträgt beispielsweise 0.5 Ohm pro Quadrat bis 1.5 Ohm pro Quadrat bei einer Spannung von 12 Volt bis 15 Volt. Fahrzeug-Windschutzscheiben mit solchen Schichtsystemen müssen insgesamt eine Lichttransmission von mindestens größer oder gleich 70% aufweisen.

In Figur 1 ist eine Draufsicht auf eine erfindungsgemäße Windschutzscheibe (1) dargestellt. Die Beschichtung (3) war am oberen und unteren Rand der Windschutzscheibe mit Stromsammelbändern (4.1) (4.2) elektrisch kontaktiert. Der elektrische Potentialunterschied zwischen dem oberen und unteren Stromsammelband (4.1) (4.2) betrug beispielsweise 14 V. Parallel zu den Stromsammelbändern wurden Äquipotentiallinien (110) definiert, senkrecht zu den Äquipotentiallinien wurden elektrische Feldlinien (115) definiert. Die Windschutzscheibe (1) enthielt am oberen Rand Datenübertragungsfenster (5) mit einer erhöhten Transmission für beispielsweise Infrarotstrahlung.

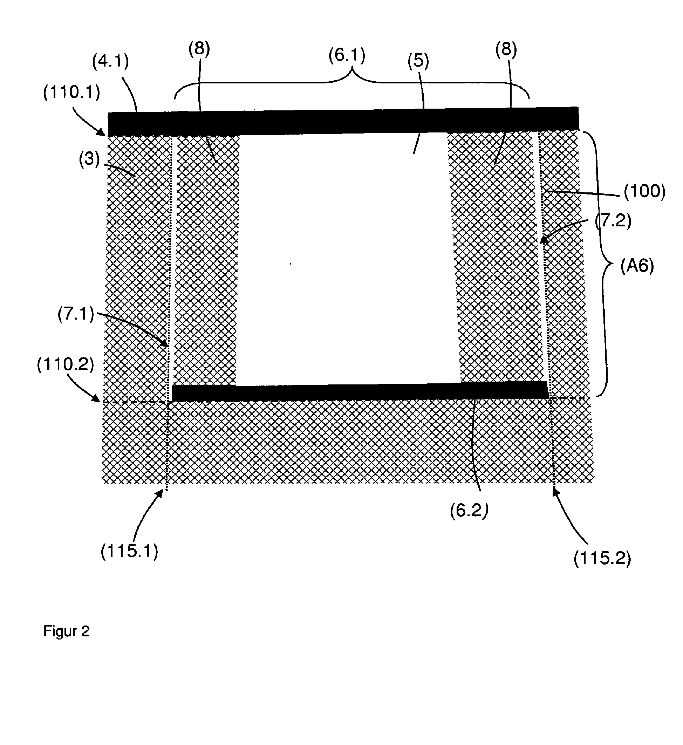

Zur besseren Darstellung zeigt Figur 2 einen Ausschnitt aus der Windschutzscheibe (1) aus Figur 1 im Bereich der Datenübertragungsfenster (5).

Um eine hohe Transmission der Infrarotstrahlung zur Datenübertragung zu erzielen war im Bereich der Datenübertragungsfenster (5) keine elektrisch leitfähige Beschichtung (3) vorhanden. Die Datenübertragungsfenster lagen innerhalb eines von der elektrisch leitfähigen transparenten Beschichtung (3) abgetrennten Bereichs (100). Die Äquipotentiallinien (110) und elektrischen Feldlinien (115) wurden für einen Zustand der beheizten Windschutzscheibe (1) definiert, in dem keine Datenübertragungsfenster (5) und kein abgegrenzter Bereich (100) vorhanden waren. Die Fläche des abgegrenzten Bereichs (100) wurde über zwei Äquipotentiallinien (110.1) (110.2) und zwei elektrische Feldlinien (115.1) (115.2) festgelegt.

Parallel zu den Äquipotentiallinien (110.1) und (110.2) wurde der Bereich (100) von einem Stromsammelbereich (6.2) und einem Teilbereich (6.1) des Stromsammelbands (4.1) begrenzt. Parallel zu den elektrischen Feldlinien (115.1) (115.2) wurde der Bereich (100) durch elektrisch isolierende Trennlinien (7.1) (7.2) begrenzt. Der Abstand (A6) der Stromsammelbereiche (6.1, 6.2) betrug 1/7 des Abstandes (A4) der Stromsammelbänder (4.1) und (4.2). Der notwendige Potentialunterschied der Stromsammelbereiche (6.1) und (6.2) zum Angleich an die Äquipotentiallinien (110.1) (110.2) betrug damit 14V x 1/7 = 2 V. Die Stromsammelbereiche (6.1) (6.2) waren über ohmsche Widerstände (8) innerhalb des Bereiches (100) elektrisch kontaktiert. In dem Ausführungsbeispiel waren die ohmschen Widerstände (8) Schichtwiderstände, ausgeführt als abgetrennte Bereiche der Beschichtung (3) innerhalb des Bereichs (100). Die Stromsammelbänder (4.1) und (4.2) und die Stromsammelbereiche (6.1) und (6.2) enthielten eine 20-100 µm dicke handelsübliche aufgedruckte Leitfähigkeitspaste auf der Basis von Silber. Die Breite des Stromsammelbereichs (6.2) betrug 10 mm. Die Breite der Stromsammelbänder (4.1) und (4.2) und damit auch des Stromsammelbereichs (6.1) betrug 5 mm.

Der ohmsche Widerstand (8) war derart dimensioniert, dass unter einer festgelegten Heizstromstromdichte, der Spannungsabfall über den ohmschen Widerstand (8) 2V betrug. Somit könnte das elektrische Potential des Stromsammelbereiches (6.2) dem Potential der Äquipotentiallinie (110.2) angepasst werden. Als Wirkung wurde eine sehr hohe Homogenität der Heizleistung über der Windschutzscheibenflächen (1) außerhalb des Bereiches (100) erzielt.

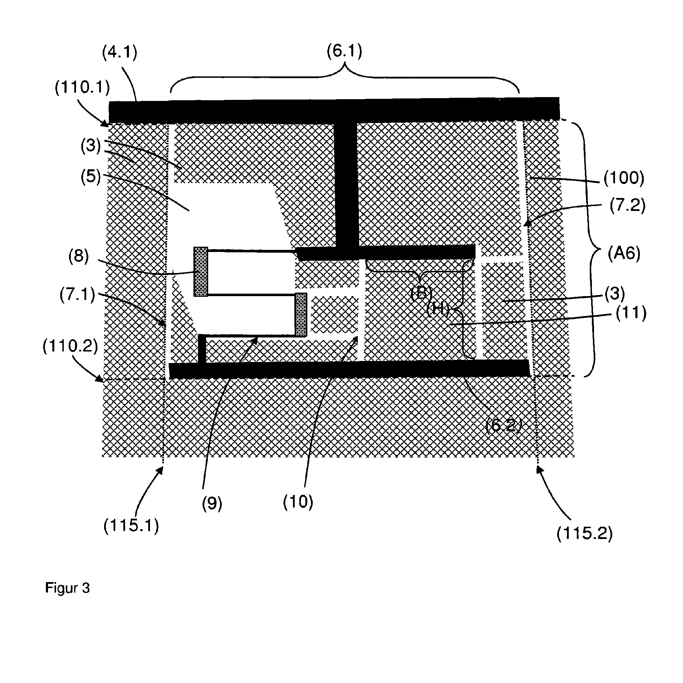

In Figuren 3 bis 5 sind Ausführungsformen des Bereichs (100) mit den Datenübertragungsfenstern dargestellt. Hierbei wurde der ohmsche Widerstand (8) derart im Bereich (100) ausgeführt, dass er zum Beheizen der Datenübertragungsfenster (5) besonders geeignet war. Die Stromsammelbereiche (6.1) und (6.2) waren über ohmsche Widerstände (8) innerhalb des Bereiches (100) elektrisch kontaktiert.

Im Ausführungsbeispiel in Figur 3 war ein erster ohmscher Widerstand (8) zum Heizen als Teilbereich (11) der Beschichtung (3) durch elektrische Trennlinien (10) ausgeführt. Durch die Abstimmung der Höhe (H) und Breite (B) mit dem spezifischen Schichtwiderstand der Beschichtung (3) und dem Heizstrom wurde der notwendige Spannungsabfall von 2 V erzielt. Der Spannungsabfall berechnet sich nach dem Ohmschen Gesetz aus der Multiplikation des spezifischen Schichtwiderstands, des Heizstroms und dem Quotienten von Höhe (H) und Breite (B) des Teilbereichs (11). Des Weiteren wurde ein ohmscher Widerstand (8) aus einem silberhaltigem Siebdruck über elektrische Kontaktlinien (9) mit den Stromsammelbereichen (6.1) und (6.2) elektrisch kontaktiert. Nach Abgleich der parallel geschalteten ohmschen Widerstände (8, 11) wurde der notwendige Spannungsabfall von 2 V zwischen den Stromsammelbereichen (6.1) und (6.2) und insbesondere auch eine Heizfunktion innerhalb des Bereichs (100) erzielt.

Damit konnte das elektrische Potential des Stromsammelbereiches (6.2) dem Potential der Äquipotentiallinie (110.2) angepasst werden. Es wurde eine sehr hohe Homogenität der Heizleistung über der Windschutzscheibenflächen (1) außerhalb des Bereiches (100) erzielt. Auch waren die Widerstände (8) derart im Bereich (100) zum Datenübertragungsfenster (5) angeordnet, dass die Joulsche Verlustwärme der ohmschen Widerstande (8) das Datenübertragungsfenster (5) vor Beschlag und Vereisung schützte.

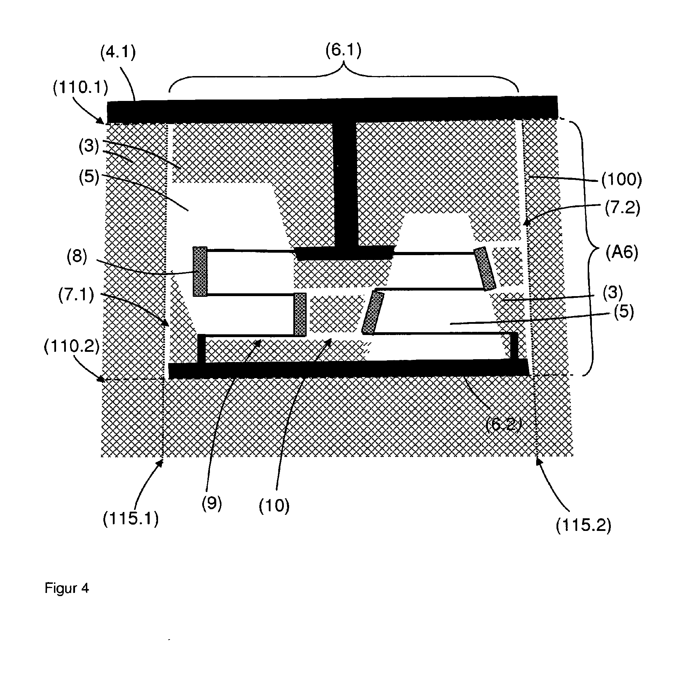

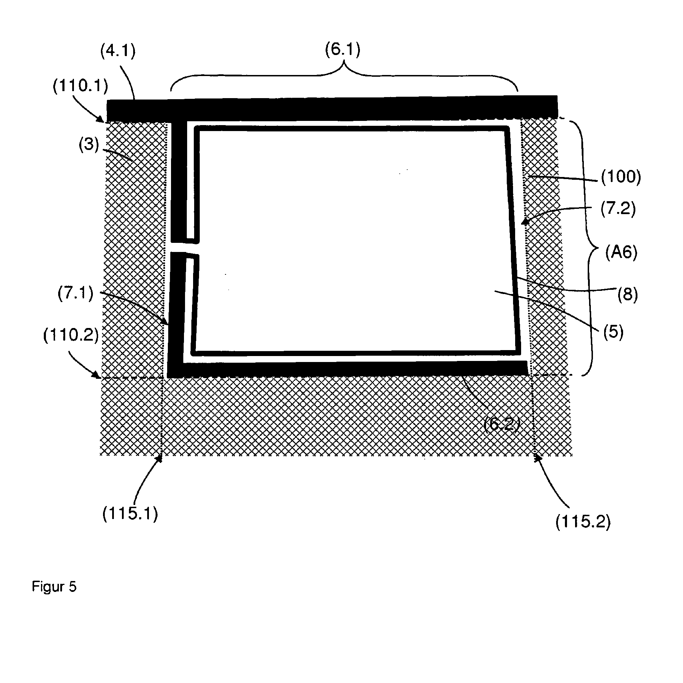

In Figuren 4 und 5 sind weitere Ausführungsformen des Bereichs (100) einer erfindungsgemäßen Windschutzscheibe (1) dargestellt.

Im Ausführungsbeispiel der Figuren 4 und 5 waren die ohmschen Widerstände (8) aus silberhaltigem Siebdruck mit einem definierten ohmschen Widerstand ausgeführt und über elektrische Kontaktlinien (9) mit den Stromsammelbereichen (6.1) und (6.2) elektrisch kontaktiert. Die Breite des Stromsammelbereichs (6.2) betrug 5 mm. Die elektrische Kontaktlinien (9) hatten eine Breite von 100 µm. Alternativ können die ohmschen Widerstände (8) auch hybrid eingebracht werden, beispielsweise als Heizdrähte oder diskrete elektrische Bauelemente ausgeführt sein.

In Figur 6 ist eine Ansicht einer erfindungsgemäßen Windschutzscheibe (1) dargestellt. Die Ausführungsform unterschied sich von dem Ausführungsbeispiel gemäß Figur 1 dadurch, dass der Stromsammelbereich (6.1) nicht ein Teilbereich des Stromsammelbandes (4.1) war. Der Bereich (100) mit dem Datenübertragungsfenster (5) konnte damit frei im Bereich der Beschichtung (3) zwischen den Stromsammelbändern (4.1) und (4.2) angeordnet werden. Der notwendige Spannungsabfall von beispielsweise 3 V zwischen den Stromsammelbereichen (6.1) und (6.2) zum Angleich an die Äquipotentiallinien (110.1) und (110.2) konnte ebenfalls unter Anpassung der ohmschen Widerstände (8) an die Heizstromdichte erzielt werden. Als Wirkung wurde eine sehr hohe Homogenität der Heizleistung über den Windschutzscheibenflächen (1) außerhalb des Bereiches (100) erzielt.

Die erfindungsgemäßen Ausführungsformen wurden jeweils mit einer Haftfolie aus Polyvinylbutyral PVB (nicht abgebildet) und einer Floatglasscheibe (nicht abgebildet) mithilfe eines Vorverbundverfahrens (Kalanderwalzen-, Schlangen- oder Vakuumsackverfahren) und einem Autoklavverfahren haftfest miteinander verbunden, so dass ein für eine Verbundsicherheitsglasscheibe typischer Aufbau resultierte.

Bei Anlegen einer elektrischen Spannung von beispielsweise 14 V an die Sammelbänder (4.1) und (4.2) fließt ein Strom homogen durch die Beschichtung (3) wodurch die Windschutzscheibe auf 50°C erhitzt wird, ohne dass sich Heiß- und Kaltstellen oder Lichtflecken bilden. Im abgetrennten Bereich (100) wurden durch eine lokale begrenzte Erhitzung der ohmschen Widerstände (8) Feuchtigkeitskondensation und Vereisung der Datenübertragungsfenster (5) minimiert.

In den Figuren 1 bis 5 haben die Bezugszeichen folgende Bedeutung:
- (1): Transparenter Gegenstand (Windschutzscheibe)
- (2): Transparentes, elektrisch isolierendes Substrat,
- (3): Elektrisch leitfähige, transparente Beschichtung,
- (4): Stromsammelband,
- (4.1): Stromsammelband,
- (4.2): Stromsammelband,
- (5): Datenübertragungsfenster,
- (6): Stromsammelbereich,
- (6.1): Stromsammelbereich,
- (6.2): Stromsammelbereich,
- (7): Elektrisch isolierende Trennlinie,
- (7.1): Elektrisch isolierende Trennlinie,
- (7.2): Elektrisch isolierende Trennlinie,
- (8): Ohmscher Widerstand,
- (9): Elektrische Kontaktlinie,
- (10): Elektrische Trennlinie im Bereich (100),
- (11): Teilbereich des Bereichs (100) als Ohmscher Widerstand,
- (100): Abgegrenzter Bereich,
- (110): Äquipotentiallinie,
- (110.1): Äquipotentiallinie,
- (110.2): Äquipotentiallinie,
- (115): Elektrische Feldlinie,
- (115.1): Elektrische Feldlinie,
- (115.2): Elektrische Feldlinie,
- (A4): Abstand der Stromsammelbänder,
- (A6): Abstand der Stromsammelbereiche

## Patentansprüche

1. Elektrisch großflächig beheizbarer, transparenter Gegenstand (1), umfassend:
- mindestens eine großflächige, elektrisch leitfähige, transparente Beschichtung (3) auf einem transparenten Substrat (2), die mit zwei elektrischen Sammelbändern (4.1) (4.2) zur Übertragung elektrischer Leistung elektrisch kontaktiert ist,
- mindestens einen örtlich begrenzten, von der Beschichtung (3) abgegrenzten Bereich (100) und
- mindestens einen örtlich begrenzten, von der Beschichtung (3) freien, transparenten Bereich (5), innerhalb des abgegrenzten Bereichs (100),
wobei der abgegrenzte Bereich (100) durch
- mindestens zwei parallel zu Äquipotentiallinien (110.1,110.2) verlaufende, über mindestens einen ohmschen Widerstand verbundene Stromsammelbereiche (6.1, 6.2) auf der Beschichtung (3) und
- mindestens zwei parallel zu elektrischen Feldlinien (115.1, 115.2) verlaufende elektrisch isolierende Trennlinien (7.1)(7.2) begrenzt ist.

2. Elektrisch großflächig beheizbarer, transparenter Gegenstand (1) nach Anspruch 1, wobei mindestens ein Stromsammelbereich (6.1) mindestens teilweise ein Stromsammelband (4.1) enthält.

3. Elektrisch großflächig beheizbarer, transparenter Gegenstand (1) nach Anspruch 1 oder 2, wobei der ohmsche Widerstand (8) einen elektrischen Schichtwiderstand von 0,1 Ohm pro Quadrat bis 100 Ohm pro Quadrat aufweist.

4. Elektrisch großflächig beheizbarer, transparenter Gegenstand (1) nach einem der Ansprüche 1 bis 3, wobei der ohmsche Widerstand (8) eine silberhaltige Siebdruckpaste enthält.

5. Elektrisch großflächig beheizbarer, transparenter Gegenstand (1) nach einem der Ansprüche 1 bis 3, wobei der ohmsche Widerstand (8) aus einem Teilbereich (11) der Beschichtung (3) innerhalb des Bereichs (100) gebildet wird.

6. Elektrisch großflächig beheizbarer, transparenter Gegenstand (1) nach einem der Ansprüche 1 bis 2, wobei der ohmsche Widerstand (8) in einem diskreten elektrischen Bauelement oder einem Heizdraht enthalten ist.

7. Elektrisch großflächig beheizbarer, transparenter Gegenstand (1) nach einem der Ansprüche 1 bis 6, wobei die elektrischen Trennlinien (7.1) (7.2) eine Breite von 50 µm bis 20 mm aufweisen.

8. Elektrisch großflächig beheizbarer, transparenter Gegenstand (1) nach einem der Ansprüche 1 bis 7, wobei die elektrisch leitfähigen Stromsammelbereiche (6) eine Breite von 1 mm bis 20 mm aufweisen.

9. Elektrisch großflächig beheizbarer, transparenter Gegenstand (1) nach einem der Ansprüche 1 bis 8, wobei der mindestens eine ohmsche Widerstand (8), der die Stromsammelbereiche (6.1) (6.2) verbindet, so zu dimensionieren ist, dass unter einer festgelegten Heizstromdichte der Spannungsabfall über den mindestens einen ohmschen Widerstand (8) das Potential der Stromsammelbereiche (6.1) (6.2) dem Potential der Äquipotentiallinien (110.1) (110.2) anpasst und derart im Bereich (100) zu einem Datenübertragungsfenster (5) angeordnet wird, dass die Joulesche Verlustwärme des mindestens einen ohmschen Widerstands (8) das Datenübertragungsfenster (5) vor Beschlag und Vereisung schützt.

10. Verfahren zur Herstellung eines elektrisch großflächig beheizbaren, transparenten Gegenstands (1) gemäβ einem der Ansprüche 1 bis 9, wobei
(I) ein elektrisch leitfähiges Material großflächig auf ein transparentes, elektrisch isolierendes Substrat (2) aufgebracht wird, wobei mindestens eine transparente, elektrisch leitfähige Beschichtung (3) und mindestens ein örtlich begrenzter, von der elektrisch leitfähigen Beschichtung (3) freier, transparenter Bereich (5), der wenigstens teilweise in Kontakt mit der Beschichtung (3) positioniert ist, erzeugt wird,
(II) die Beschichtung (3) mit zwei Stromsammelbändern (4.1 und 4.2) elektrisch kontaktiert wird,
(III) in die Beschichtung (3) elektrische Trennlinien (7.1)(7.2) parallel der elektrischen Feldlinien (115.1)(115.2) eingebracht werden,
(IV) auf der Beschichtung (3) zwischen den zwei Trennlinien (7.1)(7.2) elektrisch leitfähige Stromsammelbereiche (6.1) (6.2) parallel der Äquipotentiallinien (110.1)(110.2) gebildet werden und ein von der Beschichtung (3) abgegrenzter Bereich (100) gebildet wird und
(V) die elektrisch leitfähigen Stromsammelbereiche (6.1) (6.2) über mindestens einen ohmschen Widerstand (8) verbunden werden.

11. Verfahren nach Anspruch 10, wobei mindestens ein elektrisch leitfähiger Stromsammelbereich (6) in einem Siebdruckverfahren auf die Beschichtung (3) aufgebracht wird.

12. Verfahren nach Anspruch 10 oder 11, wobei die elektrischen Trennlinien (7.1) (7.2) und (10) mit einem Laserschnitt oder mechanisch abrasiv in die Beschichtung (3) eingebracht werden.

13. Verfahren nach einem der Ansprüche 10 bis 12, wobei der mindestens eine ohmsche Widerstand (8), der die Stromsammelbereiche (6.1) (6.2) verbindet, so zu dimensionieren ist, dass unter einer festgelegten Heizstromdichte der Spannungsabfall über den mindestens einen ohmschen Widerstand (8) das Potential der Stromsammelbereiche (6.1) (6.2) dem Potential der Äquipotentiallinien (110.1) (110.2) anpasst und derart im Bereich (100) zu einem Datenübertragungsfenster (5) angeordnet wird, dass die Joulesche Verlustwärme des mindestens einen ohmschen Widerstands (8) das Datenübertragungsfenster (5) vor Beschlag und Vereisung schützt.

14. Verwendung des elektrisch großflächig beheizbaren, transparenten Gegenstands gemäß einem der Ansprüche 1 bis 9 in Fortbewegungsmitteln für den Verkehr zu Lande, zur Luft und zu Wasser sowie im Möbel-, Geräte- und Bausektor.

15. Verwendung des elektrisch großflächig beheizbaren, transparenten Gegenstands nach Anspruch 14 in Fortbewegungsmitteln für den Verkehr mit Fahrerassistenzsystemen.

## Claims

1. Electrically extensively heatable, transparent article (1), comprising:
- at least one extensive, electrically conductive, transparent coating (3) on a transparent substrate (2) that is in electrical contact with two electrical bus bars (4.1) (4.2) for transmitting electrical power,
- at least one spatially bounded region (100), delimited from the coating (3), and
- at least one spatially bounded transparent region (5) free of the coating (3), within the delimited region (100),
wherein the delimited region (100) is bounded by
- at least two current collection regions (6.1, 6.2), running parallel to equipotential lines (110.1,110.2) and connected via at least one ohmic resistor, on the coating (3), and
- at least two electrically insulating separation lines (7.1)(7.2), running parallel to electric field lines (115.1, 115.2).

2. Electrically extensively heatable, transparent article (1) according to claim 1, wherein at least one current collection region (6.1) includes at least partially one current collection strip (4.1).

3. Electrically extensively heatable, transparent article (1) according to claim 1 or 2, wherein the ohmic resistor (8) has an electrical sheet resistivity of 0.1 ohms per square to 100 ohms per square.

4. Electrically extensively heatable, transparent article (1) according to one of claims 1 through 3, wherein the ohmic resistor (8) includes a silver-containing screenprinting paste.

5. Electrically extensively heatable, transparent article (1) according to one of claims 1 through 3, wherein the ohmic resistor (8) is formed from a subregion (11) of the coating (3) within the region (100).

6. Electrically extensively heatable, transparent article (1) according to one of claims 1 through 2, wherein the ohmic resistor (8) is contained in a discrete electrical component or a heating wire.

7. Electrically extensively heatable, transparent article (1) according to one of claims 1 through 6, wherein the electrical separation lines (7.1) (7.2) have a width of 50 µm to 20 mm.

8. Electrically extensively heatable, transparent article (1) according to one of claims 1 through 7, wherein the electrically conductive current collection regions (6) have a width of 1 mm to 20 mm.

9. Electrically extensively heatable, transparent article (1) according to one of claims 1 through 8, wherein the at least one ohmic resistor (8), which connects the current collection regions (6.1) (6.2), must be dimensioned such that below a defined heating current density, the voltage drop across the at least one ohmic resistor (8) adapts the potential of the current collection regions (6.1) (6.2) to the potential of the equipotential lines (110.1) (110.2) and is arranged in the region (100) relative to a data transmission window (5) such that the Joule heat loss of the at least one ohmic resistor (8) protects the data transmission window (5) against condensation and icing.

10. Method for producing an electrically extensively heatable, transparent article (1) according to one of claims 1 through 9, wherein
(I) an electrically conductive material is applied extensively on a transparent, electrically insulating substrate (2), wherein at least one transparent, electrically conductive coating (3) and at least one spatially bounded transparent region (5), free of the electrically conductive coating (3), which is positioned at least partially in contact with the coating (3), is created,
(II) the coating (3) is electrically contacted with two electrical bus bars (4.1 and 4.2),
(III) electrical separation lines (7.1)(7.2) are introduced into the coating (3) parallel to the electric field lines (115.1)(115.2),
(IV) electrically conductive current collection regions (6.1) (6.2) are formed on the coating (3) between the two separation lines (7.1)(7.2) parallel to the equipotential lines (110.1)(110.2), and a region (100) delimited by the coating (3) is formed, and
(V) the electrically conductive current collection regions (6.1) (6.2) are connected via at least one ohmic resistor (8).

11. Method according to claim 10, wherein at least one electrically conductive current collection region (6) is applied on the coating (3) in a silkscreening process.

12. Method according to claim 10 or 11, wherein the electrical separation lines (7.1) (7.2) and (10) are introduced into the coating (3) with a laser cut or mechanically by abrasion.

13. Method according to claims 10 through 12, wherein the at least one ohmic resistor (8), which connects the current collection regions (6.1) (6.2), must be dimensioned such that below a defined heating current density, the voltage drop across the at least one ohmic resistor (8) adapts the potential of the current collection regions (6.1) (6.2) to the potential of the equipotential lines (110.1) (110.2) and is arranged in the region (100) relative to a data transmission window (5) such that the Joule heat loss of the at least one ohmic resistor (8) protects the data transmission window (5) against condensation and icing.

14. Use of the electrically extensively heatable, transparent article according to one of claims 1 through 9 in means of transportation for land, air, and water traffic as well as in the furniture, equipment, and construction sector.

15. Use of the electrically extensively heatable, transparent article according to claim 14 in means of transportation for traffic with driver assistance systems.

## Revendications

1. Objet transparent (1) pouvant être chauffé électriquement sur une grande surface, comprenant :
- au moins un revêtement transparent (3), électroconducteur, de grande surface, sur un substrat transparent (2), qui est en contact électrique avec deux rubans collecteurs électriques (4.1)(4.2) pour la transmission d'une puissance électrique ;
- au moins une zone (100) localement restreinte et délimitée par rapport au revêtement (3) ; et
- au moins une zone transparente (5), exempte de revêtement (3), localement restreinte, à l'intérieur de la zone délimitée (100) ;
la zone délimitée (100) étant définie par :
- au moins deux zones de collecte de courant (6.1, 6.2) sur le revêtement (3), parallèles à des lignes équipotentielles (110.1, 110.2) et reliées par au moins une résistance ohmique ; et
- au moins deux lignes de séparation (7.1)(7.2) électriquement isolantes et parallèles à des lignes de champ électrique (115.1, 115.2).

2. Objet transparent (1) pouvant être chauffé électriquement sur une grande surface, selon la revendication 1, dans lequel au moins une zone de collecte de courant (6.1) comporte au moins partiellement un ruban collecteur de courant (4.1).

3. Objet transparent (1) pouvant être chauffé électriquement sur une grande surface, selon l'une des revendications 1 ou 2, dans lequel la résistance ohmique (8) présente une résistance de couche électrique de 0,1 ohm/carré à 100 ohms/carré.

4. Objet transparent (1) pouvant être chauffé électriquement sur une grande surface, selon l'une des revendications 1 à 3, dans lequel la résistance ohmique (8) contient une pâte pour sérigraphie comportant de l'argent.

5. Objet transparent (1) pouvant être chauffé électriquement sur une grande surface, selon l'une des revendications 1 à 3, dans lequel la résistance ohmique (8) est formée d'une zone partielle (11) du revêtement (3) à l'intérieur de la zone (100).

6. Objet transparent (1) pouvant être chauffé électriquement sur une grande surface, selon l'une des revendications 1 et 2, dans lequel la résistance ohmique (8) est représentée par un composant électrique discret ou par un fil chauffant.

7. Objet transparent (1) pouvant être chauffé électriquement sur une grande surface, selon l'une des revendications 1 à 6, dans lequel les lignes électriques de séparation (7.1)(7.2) présentent une largeur de 50 µm à 20 mm.

8. Objet transparent (1) pouvant être chauffé électriquement sur une grande surface, selon l'une des revendications 1 à 7, dans lequel les zones électroconductrices de collecte du courant (6) présentent une largeur de 1 mm à 20 mm.

9. Objet transparent (1) pouvant être chauffé électriquement sur une grande surface, selon l'une des revendications 1 à 8, dans lequel la au moins une résistance ohmique (8) qui relie les zones de collecte du courant (6.1) (6.2) est à dimensionner de telle sorte que, pour une densité prédéterminée de courant de chauffage, la chute de tension aux bornes de la au moins une résistance ohmique (8) adapte le potentiel des zones de collecte du courant (6.1)(6.2) au potentiel des lignes équipotentielles (110.1)(110.2) et est placée dans la zone (100) par rapport à une fenêtre de transmission de données (5) de manière que la chaleur dissipée par effet Joule par la au moins une résistance ohmique (8) protège la fenêtre de transmission de données (5) de l'embuage et du givrage.

10. Procédé de fabrication d'un objet transparent (1) pouvant être chauffé électriquement sur une grande surface, selon l'une des revendications 1 à 9, dans lequel :
(I) un matériau électroconducteur est appliqué sur une grande surface sur un substrat transparent (2) électriquement isolant, en produisant au moins un revêtement électroconducteur (3) transparent et au moins une zone transparente (5) localement restreinte, exempte du revêtement électroconducteur (3), qui est positionnée de manière à être au moins partiellement en contact avec le revêtement (3) ;
(II) le revêtement (3) est mis en contact électrique avec deux rubans collecteurs de courant (4.1 et 4.2) ;
(III) des lignes électriques de séparation (7.1)(7.2) sont placées dans le revêtement (3) parallèlement aux lignes de champ électrique (115.1)(115.2) ;
(IV) des zones de collecte de courant (6.1)(6.2), électroconductrices, sont formées sur le revêtement (3) entre les deux lignes de séparation (7.1)(7.2), parallèlement aux lignes équipotentielles (110.1)(110.2) et une zone (100) délimitée par rapport au revêtement (3) est formée ; et
(V) les zones électroconductrices de collecte du courant (6.1) (6.2) sont reliées à l'aide d'au moins une résistance ohmique (8).

11. Procédé selon la revendication 10, dans lequel au moins une zone électroconductrice de collecte du courant (6) est appliquée sur le revêtement (3) par un procédé sérigraphique.

12. Procédé selon l'une des revendications 10 ou 11, dans lequel les lignes électriques de séparation (7.1) (7.2) et (10) sont réalisées dans le revêtement (3) par une découpe au laser ou un procédé mécanique abrasif.

13. Procédé selon l'une des revendications 10 à 12, dans lequel la au moins une résistance ohmique (8) qui relie les zones de collecte du courant (6.1)(6.2) est à dimensionner de telle sorte que, pour une densité prédéterminée de courant de chauffage, la chute de tension aux bornes de la au moins une résistance ohmique (8) adapte le potentiel des zones de collecte du courant (6.1)(6.2) au potentiel des lignes équipotentielles (110.1)(110.2) et est placée dans la zone (100) par rapport à une fenêtre de transmission de données (5) de manière que la chaleur dissipée par effet Joule par la au moins une résistance ohmique (8) protège la fenêtre de transmission de données (5) de l'embuage et du givrage.

14. Utilisation de l'objet transparent (1) pouvant être chauffé électriquement sur une grande surface, selon l'une des revendications 1 à 9 dans des moyens de transport pour les déplacements terrestres, aériens ou maritimes, ainsi que dans le secteur des meubles, des appareils et du bâtiment.

15. Utilisation de l'objet transparent (1) pouvant être chauffé électriquement sur une grande surface, selon la revendication 14, dans des moyens de transport pour les déplacements avec systèmes d'assistance à la conduite.
